# EUROPEAN PATENT SPECIFICATION

(11) **EP 0 391 478 B1**
(45) Date of publication and mention of the grant of the patent: **27.10.1993**
(21) Application number: 90200776.4
(22) Date of filing: 02.04.1990
(51) Int. Cl.: A01D 34/66, A01D 34/76

(54) **A mowing machine**
Mähmaschine
Faucheuse

(30) Priority: 03.04.1989 NL 8900804
(43) Date of publication of application: 10.10.1990
(73) Proprietor: C. van der Lely N.V., NL-3155 PD Maasland (NL)
(72) Inventor: Koorn, Maarten, NL-3131 JC Vlaardingen (NL); Sikkema, Sape, NL-3143 CP Maassluis (NL)
(74) Representative: Mulder, Herman

(56) References cited:
- EP-A- 0 118 952
- EP-A- 0 240 086
- EP-A- 0 245 186
- EP-A- 0 267 659
- EP-A- 0 338 649
- DE-A- 1 507 272
- GB-A- 2 023 393
- GB-A- 2 089 634
- NL-A- 7 907 553
- NL-A- 8 501 817

## Description

The invention relates to a mowing machine comprising a cutter bar and, arranged thereabove, mowing members which are adapted to rotate about upwardly extending shafts, which mowing members are drivably interconnected via the cutter bar and are driven via a drive shaft which is connected to one of the mowing members and extends, at least partly, within an upwardly extending sleeve-shaped body rigidly connected to a transmission system box and to a carrier frame for the mowing machine, the drive shaft consisting of two detachably interconnected parts, which are in alignment and detachable in the axial direction. Such a mowing machine is known from e.g. EP-A-0 240 086.

The invention has for its object to provide such a structure of the mowing machine that the mowing member which is connected to the drive shaft and/or the drum-shaped crop guide arranged thereon can easily be mounted, demounted or replaced.

According to the invention, the above-defined mowing machine is characterized in that the sleeve-shaped body consists of two detachably interconnected parts, which are bolted together by means of bolts.

Furthermore, according to the invention, the two parts of the sleeve-shaped body and those of the drive shaft are interconnected in such a manner that, only by loosening the bolts, the upper sleeve-shaped body part connected to the carrier frame together with the upper drive shaft part bearing-supported therein can be released from the lower sleeve-shaped body part and the lower drive shaft part arranged therein, which lower drive shaft part is connected to one of the mowing members. After removal of the upper part of the sleeve-shaped body from the lower part thereof, and hence after removal of the upper part of the drive shaft from the lower part thereof, the connecting means of the mowing member connected to the lower drive shaft part and that of the drum-shaped crop guide arranged thereon are easily accessible.

In a first embodiment according to the invention, around the top end of the lower part of the sleeve-shaped body there is provided an annular element which, by means of the said bolts, is connected detachably to the upper part of the sleeve-shaped body and, in this situation, is also connected detachably to the lower part of the sleeve-shaped body via a locking ring. In accordance with the invention, the inner surface of the annular element is shaped such that, after the bolts have been loosened, this element can be moved downwardly along the lower part of the sleeve-shaped body and, thereafter, after the locking ring has been removed from the lower part of the sleeve-shaped body, it can be moved upwardly therealong and be removed therefrom. According to a further feature of the invention, the lower part of the drive shaft is provided near its lower end with a flange to which, by means of bolts, a mowing member is fastened detachably in such a manner that, after removal of the annular element, the mowing member can be moved upwardly along the lower part of the sleeve-shaped body and be detached, merely by loosening these bolts. Likewise, according to the invention, with the aid of said bolts it is also possible for a drum-shaped crop guide to be arranged capably of upward movement along the lower part of the sleeve-shaped body and of being detached. Preferably, the drum-shaped crop guide is provided near its inner top side with a sealing ring having apertures in such places that, via these apertures, the bolts, by means of which the drum-shaped crop guide and the mowing member are fastened to the flange, are accessible. The apertures in the sealing ring may be closed by means of caps provided for the purpose. Furthermore, according to the invention, in the first embodiment the annular element may constitute a seal for the drum-shaped crop guide.

In a second embodiment according to the invention, the mowing member connected to the lower part of the drive shaft is provided with a drum-shaped crop guide which is formed from separately detachable sections. In a specific embodiment, the crop guide sections have their top sides detachably connected to an annular element which, after removal of the crop guide sections, can be moved downwardly along the lower part of the sleeve-shaped body.

According to a further feature of the invention, the lower part of the drive shaft is supported by means of bearings in the lower part of the sleeve-shaped body, the inner surface of which lower sleeve-shaped body part is shaped such that, after the crop guide segments have been removed and the annular element has been moved downwardly and, moreover, after the bolts connecting the two parts of the sleeve-shaped body have been loosened and a locking ring, by means of which the upper bearing is locked relative to the lower part of the drive shaft, has been removed, this lower part can be moved upwardly together with the upper bearing and can be detached from the lower part of the drive shaft.

In accordance with a further feature of the invention, the lower part of the drive shaft is provided near its lower end with a flange, to which by means of bolts a mowing member is fastened detachably in such a manner that, after removal of the lower part of the sleeve-shaped body, the mowing member can be moved upwardly along the lower part of the drive shaft and be removed, simply by loosening the said bolts.

According to the invention, the two embodiments have the feature of positioning the flange, to which the mowing member and the drum-shaped crop guide are connected, at such a distance from the bottom side of the cutter bar that the energy transfer from the drive shaft to drive means, extending through the cutter bar, of the individual mowing members is effected via a pair of bevel gearwheels in combination with a pair of cylindrical gearwheels. The fact that the flange is disposed in a relatively high position, so that the lower part of both the sleeve-shaped body and the drive shaft are of a reduced length, simplifies, particularly in the first embodiment, the mounting and demounting of the mowing machine, while it furthermore creates, under the mowing member connected to the drive shaft, more space for an energetically more advantageous energy transfer from the drive shaft to the drive means extending through the cutter bar.

For a better understanding of the invention and to show how the same may be carried into effect, reference will now be made, by way of example, to some embodiments of the mowing machine as shown in the accompanying drawings, in which drawings:
Figure 1 is a schematic front view of a front mowing machine according to the invention;
Figure 2 is a cross-sectional view of a connection between the carrier frame and the cutter bar of the mowing machine shown in Figure 1, as well as of the drive means extending therethrough;
Figure 3 is a cross-sectional view of part of the connection between the carrier frame and the cutter bar in a second embodiment, as well as of the drive means extending therethrough, and
Figure 4 is a cross-sectional view of the lower part of the connection between the carrier frame and the cutter bar, as well as of the drive means extending therethrough.

In the various drawings, which only show the mowing machine schematically, corresponding components have been denoted by the same reference numerals.

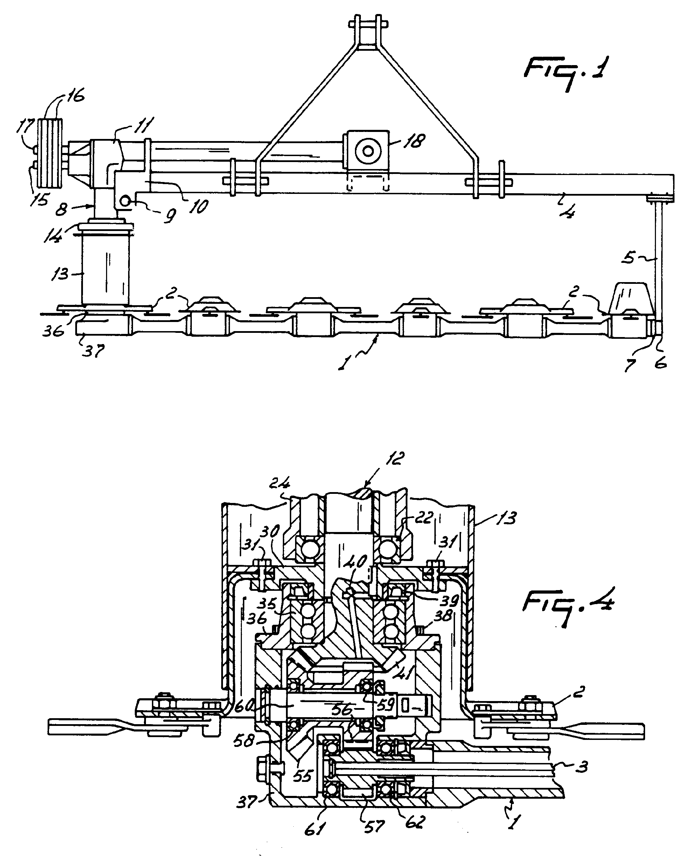

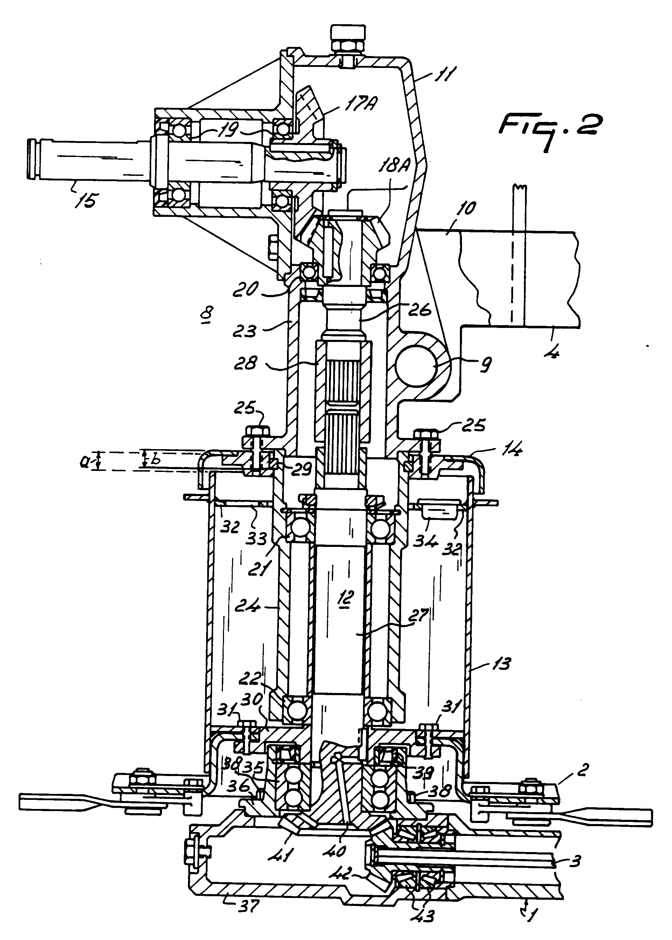

The front mowing machine, as shown in a schematic front view in Fig. 1, comprises a cutter bar 1 and, arranged thereabove, mowing members 2 which are adapted to rotate about upwardly extending shafts, which mowing members are drivably interconnected via the cutter bar by means of a shaft 3 extending through the cutter bar 1 (Figures 2 to 4). Above the cutter bar 1 there is provided a carrier frame 4, which extends in the same direction as the cutter bar. The cutter bar 1 and the carrier frame 4 are interconnected near their ends. The first connection between the carrier frame 4 and the cutter bar 1 extends beyond the range of the mowing members 2. This connection includes a connecting beam 5 which extends downwardly and, in the plane of the drawing, rearwardly, and at its upper end is connected rigidly to the carrier frame 4 and at its lower end to the cutter bar 1 via an intermediate plate section 6 and a spring-loaded element 7; the spring-loaded element is constituted by a substantially horizontal plate-shaped connecting element, e.g. a spring-steel plate. The second connection between the carrier frame 4 and the cutter bar 1 extends via a sleeve-shaped body 8 and one of the outermost mowing members 2. In this embodiment, the carrier frame 4 is connected pivotably to the sleeve-shaped body 8. For this purpose, to the sleeve-shaped body 8 there are connected rigidly pivot pins 9, around which the forked end 10 of the carrier frame 4 can pivot. In addition, the sleeve-shaped body 8 is connected rigidly to a transmission system box 11, from which the drive of the mowing members 2 is effected via the drive shaft 12 that is bearing-supported in the sleeve-shaped body 8 (see Figures 2 to 4). The outermost mowing member 2, through which the other mowing members are driven, is fitted with a drum-shaped crop guide 13; the sleeve-shaped body 8 extends partly into the crop guide and is provided with an annular element 14 which is closely contiguous to the crop guide 13 and seals it.

The forces acting on the cutter bar during operation are transferred by the drive shaft 12, which extends through the second connection between the carrier frame 4 and the cutter bar 1, to the ingoing shaft 15 of the transmission system in the transmission system box 11. These forces may be such that the drive shaft 12 and, via its bearing, the sleeve-shaped body 8 and the transmission system box 11 are submitted to a slight displacement in a vertical plane perpendicular to the direction of operative travel. This also implies a slight displacement and/or rotation of the ingoing shaft 15 in said vertical plane. For this reason, the ingoing shaft 15 is here preferably driven by one or more belts 16, i.e. from a shaft 17 which is supported rigidly relative to the carrier frame 4. The shaft 17 itself is driven via a gear box 18 by a power take-off shaft extending from an agricultural tractor, to which the mowing machine is coupled.

The movement of the ingoing shaft 15 is transferred via two bevel gearwheels 17A and 18A to the drive shaft 12 (see Figure 2). The ingoing shaft 15 cum bevel gearwheel 17A is supported by means of bearings 19 in the transmission system box 11. The drive shaft 12 cum bevel gearwheel 18A is supported by means of bearings 20, 21 and 22 in the sleeve-shaped body 8. The sleeve-shaped body 8 consists of two parts 23 and 24, which are detachably interconnected. The upper part 23 of the sleeve-shaped body 8 is connected to the carrier frame 4, in the present embodiment via the pivotal connection 9, 10.

The two parts 23 and 24 of the sleeve-shaped body 8 are interconnected by means of bolts 25. The drive shaft 12, too, consists of two detachably interconnected parts 26 and 27, which two drive shaft parts 26 and 27 are in alignment and are interconnected in such a manner that they are detachable in the axial direction. For this purpose, the lower end of the upper drive shaft part 26 and the upper end of the lower drive shaft part 27 are surrounded by a bushing 28. Together with the bushing 28, the said ends of the drive shaft parts 26 and 27 form an axially extending spline connection. By simply and only loosening the bolts 25, the upper part 23 of the sleeve-shaped body 8, together with the upper part 26 of the drive shaft 12 bearing-supported therein can be released from the lower part 24 of the sleeve-shaped body 8 and the lower part 27 of the drive shaft 12 arranged therein.

The annular element 14 is disposed around the lower part 24 of the sleeve-shaped body 8, more particularly at the top end thereof. The bolts 25 detachably connect the annular element 14 to the upper part 23 of the sleeve-shaped body 8, while, in this connected state, the element is detachably connected by means of a locking ring 29, constituted by e.g. two ring halves, to the lower part 24 of the sleeve-shaped body 8. The inner surface of the annular element 14 is of such a shape that, after the bolts 25 have been loosened, this element can be moved downwardly along the lower part 24 of the sleeve-shaped body; in this connection, the distance b through which the annular element 14 must be capable of downward movement must be less than the distance a between the top edge of the crop guide 13 and that part of the annular element 14 which is located directly over it. Once the annular element 14 has moved downwardly, the locking ring 29 can be removed, whereafter the annular element 14 can be pushed upwardly along the lower part 24 of the sleeve-shaped body 8 and be removed therefrom.

Near its bottom side, the lower part 27 of the drive shaft 12 is provided with a flange 30, to which a mowing member 2 as well as the drum-shaped crop guide 13 are connected detachably by means of bolts 31. Near its inner top side, the crop guide 13 is provided with a sealing ring 32 having apertures 33 in such places that, via these apertures, the bolts 31 are accessible. The apertures 33 may be closed by means of caps 34. After removal of the annular element 14 and of the caps 34, the bolts 31 can be loosened through the apertures 33, whereafter the crop guide 13 and subsequently the relevant mowing member 2 can be moved upwardly along the lower part 24 of the sleeve-shaped body 8 and be removed.

In addition, the bottom side of the lower part 27 of the drive shaft 12 is bearing-supported by means of a bearing 35 in a housing formed of two parts 36 and 37. The two housing parts are bolted together by means of bolts 38. Between the bearing 35 and the flange 30 around a lower ring portion thereof and within the upper part 36 of the housing there is provided a seal 39. An air vent channel 40 is provided between the interior of the housing and the environment; this channel extends from the bottom face of the lower drive shaft part 27 through this shaft part in the upward direction, thereafter in a substantially radial direction to the peripheral plane of the lower drive shaft part 27 and from there via a bore in the lower ring portion of the flange 30 to the space between the seal 39 and the bottom of the flange 30.

The movement of the drive shaft 12 is transferred via the bevel gearwheels 41 and 42 to the shaft 3 which extends through the cutter bar 1, in which connection it should be noted that the bevel gearwheel 42 is bearing-supported in the housing 36, 37 by means of a bearing 43.

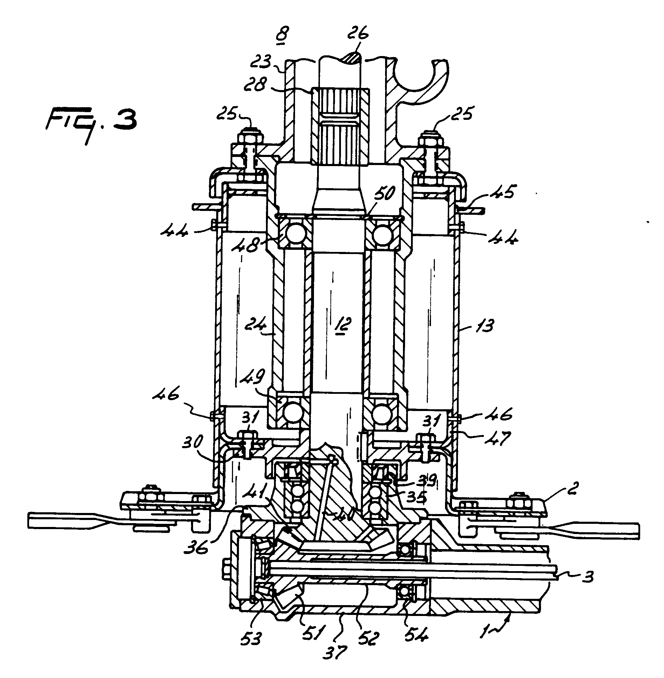

In the embodiment shown in Figure 3, the drum-shaped crop guide 13 is assembled from separately detachable segments. By means of bolts 44 these segments are connected detachably to an annular element 45 and by means of bolts 46 to supports 47 which are secured to the flange 30. The crop guide segments can be removed by loosening the bolts 44 and 46. After these segments have been removed, the annular element 45 can be moved downwardly along the lower part 24 of the sleeve-shaped body 8, as a result of which the bolts 25 become accessible. In the same manner as in the first embodiment, by loosening the bolts 25 it is achieved that the upper part 23 of the sleeve-shaped body 8 together with the upper part 26 of the drive shaft 12 bearing-supported therein are released from the lower part 24 of the sleeve-shaped body 8 and the lower part 27 of the drive-shaft 12 arranged therein.

The lower part 27 of the drive shaft 12 is bearing-supported in the lower part 24 of the sleeve-shaped body 8 by means of bearings 48 and 49. In this situation, the drive shaft part 27 is locked in the axial direction by means of a locking ring 50. The inner surface of the lower part 24 of the sleeve-shaped body 8 is shaped such that, after the crop guide segments have been removed and the annular element 45 has been moved downwardly and, moreover, after the bolts 25 have been loosened and the locking ring 50 has been removed, this lower part 24 can be moved upwardly together with the upper bearing 48 and be removed from the lower part 27 of the drive shaft 12.

Like in the first embodiment, also here the flange 30 is provided near the bottom side of the lower part 27 of the drive shaft 12, to which flange 30 the mowing member 2 and the supports 47 are connected detachably by means of the bolts 31. After removal of the lower part 24 of the sleeve-shaped body 8, by loosening the bolts 31 the relevant mowing member 2 can be moved upwardly along the lower part 27 of the drive shaft 12 and be removed.

In the same manner as in the embodiment shown in Figure 2, the bottom side of the lower drive shaft part 27 is bearing-supported in a housing, while also the seal 39 and the air vent channel 40 have been provided in the same manner. Likewise, also here the movement of the drive shaft 12 is transferred via bevel gearwheels 41 and 51 to the shaft 3 extending through the cutter bar 1, in which connection it should be noted that the bevel gearwheel 51 together with the bushing 52 forming an integral whole therewith is bearing-supported in the housing 36, 37 by means of bearings 53, 54. The shape of the bevel gearwheel 51 differs from that of the bevel gearwheel 42 in the first embodiment in that on the bevel gearwheel 51 the teeth extend towards the bushing 52. For production-technical reasons a design of the bevel gearwheel 42 as shown in Figure 2 will generally be preferred.

Figure 4 shows the lower part of the connection between the carrier frame 4 and the cutter bar 1 in an alternative embodiment. In this embodiment, the flange 30 is located at a greater distance from the bottom face of the cutter bar 1 than in the embodiments shown in Figures 2 and 3. Consequently, a larger space is provided under the mowing member 2 for an energetically more advantageous gearwheel transmission. In this embodiment, the gearwheel transmission is effected by means of a pair of bevel gearwheels 41, 55 in combination with a pair of cylindrical gearwheels 56, 57. The bevel gearwheel 55 and the cylindrical gearwheel 56 are provided on a shaft or, as is shown in Figure 4, together from an integral whole. This integral gearwheel combination is bearing-supported by means of bearings 58, 59 around a shaft 60 which is arranged rigidly in the housing 36, 37. The cylindrical gearwheel 57 is bearing-supported in the housing 36, 37 by means of bearings 61, 62. When the design shown in Figure 4 is used in the embodiment of Figure 2, the distance between the apertures 33 in the sealing ring 32 and the bolts 31 will have become less than that shown in Figure 2, which simplifies mounting/demounting.

The invention, as it has been described with reference to Figures 2 to 4, is not limited to a mowing machine of the type as shown schematically in Figure 1. Alternatively, the invention can be employed in mowing machines wherein the carrier frame 4 is disposed in a completely different manner, e.g. without pivot pins 9, 10, in mowing machines wherein the drive of the drive shaft 12 is effected in a completely different manner, in mowing machines wherein the drive means in the cutter bar is not constituted by a shaft 3 but by gearwheels arranged in a side-by-side relationship, etc.

## Claims

1. A mowing machine comprising a cutter bar (1) and, arranged thereabove, mowing members (2) which are adapted to rotate about upwardly extending shafts, which mowing members (2) are drivably interconnected via the cutter bar (1) and are driven via a drive shaft (12) which is connected to one of the mowing members (2) and extends, at least partly, within an upwardly extending sleeve-shaped body (8) rigidly connected to a transmission system box (11) and to a carrier frame (4) for the mowing machine, the drive shaft (12) consisting of two detachably interconnected parts (26, 27) which are in alignment and detachable in the axial direction, characterized in that the sleeve-shaped body (8) consists of two detachably interconnected parts (23, 24), which are bolted together by means of bolts (25).

2. A mowing machine as claimed in claim 1, characterized in that the two parts (23, 24 and 26, 27, respectively) of the sleeve-shaped body (8) and of the drive shaft (12) are interconnected in such a manner that, only by loosening the bolts (25), the upper part (23) of the sleeve-shaped body (8) connected to the carrier frame (4) together with the upper part (26) of the drive shaft (12) bearing-supported therein can be released from the lower part (24) of the sleeve-shaped body (8) and the lower part (27) of the drive shaft (12) arranged therein, which lower part (27) of the drive shaft (12) is connected to one of the mowing members (2).

3. A mowing machine as claimed in claim 2, characterized in that around the top end of the lower part (24) of the sleeve-shaped body (8) there is provided an annular element (14) which, by means of the said bolts (25), is connected detachably to the upper part (23) of the sleeve-shaped body (8) and, in this situation, is also connected detachably to the lower part (24) of the sleeve-shaped body (8) via a locking ring (29).

4. A mowing machine as claimed in claim 3, characterized in that the inner surface of the annular element (14) is shaped such that, after the bolts (25) have been loosened, this element (14) can be moved downwardly along the lower part (24) of the sleeve-shaped body (8) and, thereafter, after the locking ring (29) has been removed from the lower part (24) of the sleeve-shaped body (8), it can be moved upwardly therealong and be removed therefrom.

5. A mowing machine as claimed in claim 3 or 4, characterized in that the lower part (27) of the drive shaft (12) is provided near its lower end with a flange (30) to which, by means of bolts (31), a mowing member (2) is fastened detachably in such a manner that, after removal of the annular element (14), the mowing member (2) can be moved upwardly along the lower part (24) of the sleeve-shaped body (8) and be detached, merely by loosening the bolts (31).

6. A mowing machine as claimed in claim 5, characterized in that, by using the same bolts (31) as by means of which the mowing member (2) is connected to the flange (30), a drum-shaped crop guide (13) can be arranged capably of upward movement along the lower part (24) of the sleeve-shaped body (8) and of being detached.

7. A mowing machine as claimed in claim 6, characterized in that the drum-shaped crop guide (13) is provided near its inner top side with a sealing ring (32) having apertures (33) in such places that, via these apertures (33), the bolts (31), by means of which the drum-shaped crop guide (13) and the mowing member (2) are fastened to the flange (30), are accessible.

8. A mowing machine as claimed in claim 7, characterized in that caps (34) are provided to close the apertures (33) in the sealing ring (32).

9. A mowing machine as claimed in claim 6, 7 or 8, characterized in that the annular element (14) constitutes a seal for the drum-shaped crop guide (13).

10. A mowing machine as claimed in claim 1 or 2, characterized in that the mowing member (2) connected to the lower part (27) of the drive shaft (12) is provided with a drum-shaped crop guide (13) which is formed from separately detachable sections.

11. A mowing machine as claimed in claim 10, characterized in that the crop guide sections have their top sides detachably connected to an annular element (45) which, after removal of the crop guide sections, can be moved downwardly along the lower part (24) of the sleeve-shaped body (8).

12. A mowing machine as claimed in claim 11, characterized in that the lower part (27) of the drive shaft (12) is supported by means of bearings (48, 49) in the lower part (24) of the sleeve-shaped body (8), the inner surface of which lower part (24) of the sleeve-shaped body (8) is shaped such that, after the crop guide segments have been removed and the annular element (45) has been moved downwardly and, moreover, after the said bolts (25) have been loosened and a locking ring (50), by means of which the upper bearing (48) is locked relative to the lower part (27) of the drive shaft (12), has been removed, this lower part (24) can be moved upwardly together with the upper bearing (48) and can be detached from the lower part (27) of the drive shaft (12).

13. A mowing machine as claimed in claim 10, characterized in that the lower part (27) of the drive shaft (12) is provided near its lower end with a flange (30), to which by means of bolts (31) a mowing member (2) is fastened detachably in such a manner that, after removal of the lower part (24) of the sleeve-shaped body (8), the mowing member (2) can be moved upwardly along the lower part (27) of the drive shaft (12) and be removed, simply by loosening the said bolts (31).

14. A mowing machine as claimed in claim 5 or 13, characterized in that the flange (30) is arranged at such a distance from the bottom side of the cutter bar (1) that the energy transfer from the drive shaft (12) to the drive means (3), extending through the cutter bar (1), for the other mowing members (2) is effected via a pair of bevel gearwheels (41, 55) in combination with a pair of cylindrical gearwheels (56, 57).

## Patentansprüche

1. Mähmaschine mit einem Mähbalken (1) und darüber angeordneten Mähgliedern (2), die derart ausgebildet und angeordnet sind, daß sie um aufwärts gerichtete Achsen rotieren, und die über den Mähbalken (1) antriebsverbunden und von einer Antriebswelle (12) angetrieben sind, die mit einem der Mähglieder (2) verbunden und zumindest teilweise in einem nach oben gerichteten, hülsenförmigen Körper (8) angeordnet ist, der mit einem Getriebekasten (11) und einem Rahmenbalken (4) der Mähmaschine starr verbunden ist, wobei die Antriebswelle (12) aus zwei lösbar verbundenen Teilen (26, 27) besteht, die fluchtend zueinander ausgerichtet und in axialer Richtung lösbar sind,
dadurch gekennzeichnet, daß der hülsenförmige Körper (8) aus zwei lösbar verbundenen Teilen (23, 24) besteht, die durch Schrauben (25) miteinander verschraubt sind.

2. Mähmaschine nach Anspruch 1,
dadurch gekennzeichnet, daß die beiden Teile (23, 24 bzw. 26, 27) des hülsenförmigen Körpers (8) bzw. der Antriebswelle (12) jeweils in der Weise miteinander verbunden sind, daß der obere Teil (23) des mit dem Rahmenbalken (4) verbundenen, hülsenförmigen Körpers (8) zusammen mit dem oberen Teil (26) der Antriebswelle (12), die in diesem gelagert und abgestützt ist, durch bloßes Lösen der Schrauben (25) von dem unteren Teil (24) des hülsenförmigen Körpers (8) und dem unteren Teil (27) der in diesem angeordneten Antriebswelle (12) zu lösen ist, wobei der untere Teil (27) der Antriebswelle (12) mit einem der Mähglieder (2) verbunden ist.

3. Mähmaschine nach Anspruch 2,
dadurch gekennzeichnet, daß das obere Ende des unteren Teiles (24) des hülsenförmigen Körpers (8) von einem ringförmigen Element (14) umgeben ist, das mittels der Schrauben (25) mit dem oberen Teil (23) des hülsenförmigen Körpers (8) und in dieser Position durch einen Haltering (29) auch mit dem unteren Teil (24) des hülsenförmigen Körpers (8) lösbar verbunden ist.

4. Mähmaschine nach Anspruch 3,
dadurch gekennzeichnet, daß die Innenfläche des ringförmigen Elementes (14) so ausgebildet ist, daß das Element (14) nach Lösen der Schrauben (25) an dem unteren Teil (24) des hülsenförmigen Körpers (8) entlang nach unten zu bewegen ist und anschließend, nachdem der Haltering (29) von dem unteren Teil (24) des hülsenförmigen Körpers (8) entfernt wurde, an diesem entlang nach oben zu bewegen und von ihm abzunehmen ist.

5. Mähmaschine nach Anspruch 3 oder 4,
dadurch gekennzeichnet, daß der untere Teil (27) der Antriebswelle (12) an seinem unteren Ende einen Flansch (30) aufweist, an dem mittels Schrauben (31) ein Mähglied (2) in der Weise lösbar befestigt ist, daß das Mähglied (2) nach Entfernen des ringförmigen Elementes (14) an dem unteren Teil (24) des hülsenförmigen Körpers (8) entlang nach oben zu bewegen und durch Lösen der Schrauben (31) in einfacher Weise abzunehmen ist.

6. Mähmaschine nach Anspruch 5,
dadurch gekennzeichnet, daß durch Verwendung derselben Schrauben (31), mittels derer das Mähglied (2) mit dem Flansch (30) verbunden ist, eine trommelförmige Mähgutführung (13) an dem unteren Teil (24) des hülsenförmigen Körpers (8) entlang höhenverschiebbar und lösbar anzuordnen ist.

7. Mähmaschine nach Anspruch 6,
dadurch gekennzeichnet, daß die trommelförmige Mähgutführung (13) nahe ihrer inneren Oberseite mit einem Dichtring (32) versehen ist, der derart angeordnete Öffnungen (33) aufweist, daß die Schrauben (31), mittels derer die trommelförmige Mähgutführung (13) und das Mähglied (2) an dem Flansch (30) befestigt sind, durch diese Öffnungen (33) zugänglich sind.

8. Mähmaschine nach Anspruch 7,
dadurch gekennzeichnet, daß Stopfen (34) zum Verschließen der in dem Dichtring (32) angeordneten Öffnungen (33) vorgesehen sind.

9. Mähmaschine nach Anspruch 6, 7 oder 8,
dadurch gekennzeichnet, daß das ringförmige Element (14) eine Abdichtung für die trommelförmige Mähgutführung (13) bildet.

10. Mähmaschine nach Anspruch 1 oder 2,
dadurch gekennzeichnet, daß das mit dem unteren Teil (27) der Antriebswelle (12) verbundene Mähglied (2) eine trommelförmige Mähgutführung (13) aufweist, die aus separat lösbaren Teilstücken gebildet ist.

11. Mähmaschine nach Anspruch 10,
dadurch gekennzeichnet, daß die Oberseiten der Teilstücke der Mähgutführung lösbar mit einem ringförmigen Element (45) verbunden sind, das nach Entfernen der Teilstücke der Mähgutführung an dem unteren Teil (24) des hülsenförmigen Körpers (8) entlang nach unten zu bewegen ist.

12. Mähmaschine nach Anspruch 11,
dadurch gekennzeichnet, daß der untere Teil (27) der Antriebswelle (12) mittels Lagern (48, 49) abgestützt ist, die in dem unteren Teil (24) des hülsenförmigen Körpers (8) vorgesehen sind, wobei die Innenfläche des unteren Teiles (24) des hülsenförmigen Körpers (8) derart ausgebildet ist, daß , nachdem die Teilstücke der Mähgutführung abgenommen worden sind und das ringförmige Element (45) nach unten bewegt wurde, und nachdem ferner die Schrauben (25) gelöst worden sind und ein Haltering (50) entfernt wurde, mittels dessen das obere Lager (48) relativ zu dem unteren Teil (27) der Antriebswelle (12) verriegelt ist, der untere Teil (24) zusammen mit dem oberen Lager (48) nach oben zu bewegen und von dem unteren Teil (27) der Antriebswelle (12) zu lösen ist.

13. Mähmaschine nach Anspruch 10,
dadurch gekennzeichnet, daß der untere Teil (27) der Antriebswelle (12) nahe seinem unteren Ende einen Flansch (30) aufweist, an dem ein Mähglied (2) mittels Schrauben (31) in der Weise lösbar befestigt ist, daß das Mähglied (2) nach Abnehmen des unteren Teiles (24) des hülsenförmigen Körpers (8) an dem unteren Teil (27) der Antriebswelle (12) entlang nach oben zu bewegen und durch Lösen der Schrauben (31) in einfacher Weise abzunehmen ist.

14. Mähmaschine nach Anspruch 5 oder 13,
dadurch gekennzeichnet, daß der Flansch (30) in einer solchen Entfernung von der Unterseite des Mähbalkens (1) angeordnet ist, daß die Übertragung des Drehmomentes von der Antriebswelle (12) auf die Getriebeglieder (3), die sich durch den Mähbalken (1) hindurch erstrecken, bei den anderen Mähgliedern (2) über zwei Kegelräder (41, 55) erfolgt, die mit zwei zylindrischen Zahnrädern (56, 57) zusammenwirken.

## Revendications

1. Machine faucheuse comprenant une barre de coupe (1) et, disposés au dessus de celle-ci, des organes faucheurs (2) qui sont adaptés pour tourner autour d'arbres s'étendant vers le haut, lesquels organes faucheurs (2) sont interconnectés en entraînement par l'intermédiaire de la barre de coupe (1) et sont entraînés par un arbre d'entraînement (12) qui est relié à un des organes faucheurs (2) et s'étend, au moins partiellement, dans un corps (8) en forme de manchon, s'étendant vers le haut, relié rigidement à une boîte (11) du système de transmission et à un châssis porteur (4) pour la machine faucheuse, l'arbre d'entraînement (12) consistant en deux parties interconnectées de manière amovible (26, 27) qui sont en alignement et séparables dans la direction axiale,
**caractérisée** en ce que le corps (8) en forme de manchon consiste en deux parties (23, 24) interconnectées de manière amovible, qui sont boulonnées ensemble au moyen de boulons (25).

2. Machine faucheuse selon la revendication 1, caractérisée en ce que les deux parties (23, 24 et 26, 27, respectivement) du corps (8) en forme de manchon et de l'arbre d'entraînement (12) sont interconnectées de telle manière que, seulement en desserrant les boulons (25), la partie supérieure (23) du corps (8) en forme de manchon, reliée au châssis porteur (4), ensemble avec la partie supérieure (26) de l'arbre d'entraînement (12) supporté par des paliers dans celle-ci, puisse être dégagée de la partie inférieure (24) du corps (8) en forme de manchon et de la partie inférieure (27) de l'arbre d'entraînement (12) disposée dans celle-ci, laquelle partie inférieure (27) de l'arbre d'entraînement (12) est reliée à un des organes faucheurs (2).

3. Machine faucheuse selon la revendication 2, caractérisée en ce qu'il est prévu, autour de l'extrémité supérieure de la partie inférieure (24) du corps (8) en forme de manchon, un élément annulaire (14) qui est relié de manière amovible, au moyen desdits boulons (25), à la partie supérieure du corps (8) en forme de manchon et qui, dans cette situation, est également reliée de manière amovible à la partie inférieure (24) du corps (8) en forme de manchon, par l'intermédiaire d'une bague de verrouillage (29).

4. Machine faucheuse selon la revendication 3, caractérisée en ce que la surface interne de l'élément annulaire (14) a une forme telle qu'on puisse, après desserrage des boulons (25), abaisser cet élément annulaire (14) le long de la partie inférieure (24) du corps (8) en forme de manchon, et ensuite, après enlèvement de la bague de verrouillage (29) hors de la partie inférieure (24) du corps (8) en forme de manchon, le mouvoir vers le haut le long de celui-ci et l'en séparer.

5. Machine faucheuse selon la revendication 3 ou 4, caractérisée en ce que la partie inférieure (27) de l'arbre d'entraînement (12) est munie, près de son extrémité inférieure, d'une bride (30) sur laquelle un organe faucheur (2) est attaché de manière amovible au moyen de boulons (31), de telle façon que l'organe faucheur (2) puisse, après enlèvement de l'élément annulaire (14), être déplacé vers le haut le long de la partie inférieure (24) du corps (8) en forme de manchon, simplement en détachant les boulons (31).

6. Machine faucheuse selon la revendication 5, caractérisée en ce qu'en utilisant les mêmes boulons (31) au moyen desquels l'organe faucheur (2) est relié à la bride (30), un guide-récolte (13) en forme de tambour peut être disposé en étant capable de mouvement vers le haut le long de la partie inférieure (24) du corps (8) en forme de manchon, et d'être détaché.

7. Machine faucheuse selon la revendication 6, caractérisée en ce que le guide-récolte (13) en forme de tambour est muni, près de son côté supérieur interne, d'une bague d'étanchéîté (32) ayant des ouvertures (33) en des endroits tels que ces ouvertures (33) rendent accessibles les boulons (31) au moyen desquels le guide-récolte (13) et l'organe faucheur (2) sont attachés à la bride (30).

8. Machine faucheuse selon la revendication 7, caractérisée en ce que des bouchons (34) sont prévus pour obturer les ouvertures (33) dans la bague d'étanchéïté (32).

9. Machine faucheuse selon la revendication 6, 7 ou 8, caractérisée en ce que l'élément annulaire (14) constitue un joint étanche pour le guide-récolte (13) en forme de tambour.

10. Machine faucheuse selon la revendication 1 ou 2, caractérisée en ce que l'organe faucheur (2) relié à la partie inférieure (27) de l'arbre d'entraînement (12) est muni d'un guide-récolte (13) qui est formé de sections pouvant être détachées séparément.

11. Machine faucheuse selon la revendication 10, caractérisée en ce que les sections du guide-récolte ont leurs côtés supérieurs reliés de manière amovible à un élément annulaire (45) qui peut être déplacé vers le bas le long de la partie inférieure (24) du corps (8) en forme de manchon, après enlèvement des sections du guide-récolte.

12. Machine faucheuse selon la revendication 11, caractérisée en ce que la partie inférieure (27) de l'arbre d'entraînement (12) est supportée au moyen de paliers (48, 49) dans la partie inférieure (24) du corps (8) en forme de manchon, la surface interne de ladite partie inférieure (24) du corps (8) en forme de manchon ayant une forme telle qu'après enlèvement des segments du guide-récolte et abaissement de l'élément annulaire (45) et, de plus, après desserrage desdits boulons (25) et enlèvement d'une bague de verrouillage (50) au moyen de laquelle le palier supérieur (48) est bloqué par rapport à la partie inférieure (27) de l'arbre d'entraînement (12), cette partie inférieure (24) puisse être déplacée vers le haut, ensemble avec le palier supérieur (48) et puisse être détachée de la partie inférieure (27) de l'arbre d'entraînement (12).

13. Machine faucheuse selon la revendication 10, caractérisée en ce que la partie inférieure (27) de l'arbre d'entraînement (12) est munie, près de son extrémité inférieure, d'une bride (30) à laquelle un organe faucheur (2) est attaché au moyen de boulons (31), de façon amovible et de telle manière qu'après enlèvement de la partie inférieure (24) du corps (8) en forme de manchon, l'organe faucheur (2) puisse être déplacé vers le haut le long de la partie inférieure (27) de l'arbre d'entraînement (12) et être enlevé, simplement en desserrant lesdits boulons (31).

14. Machine faucheuse selon la revendication 5 ou 13, caractérisée en ce que la bride (30) est disposée à une distance du côté inférieur de la barre de coupe (1) telle que le transfert d'énergie de l'arbre d'entraînement (12) au moyen d'entraînement (3) s'étendant dans la barre de coupe (1) pour les autres organes faucheurs (2) est effectué par l'intermédiaire d'une paire de pignons coniques (41, 55) en combinaison avec une paire d'engrenages cylindriques (56,57).
